# EUROPÄISCHE PATENTSCHRIFT

(11) **EP 0 835 855 B1**
(45) Veröffentlichungstag und Bekanntmachung des Hinweises auf die Patenterteilung: **11.09.2002**
(21) Anmeldenummer: 97117294.5
(22) Anmeldetag: 07.10.1997
(51) Int. Cl.: C05F 17/00, C05F 17/02, B65G 21/08

(54) **Verfahren und Vorrichtung zum Kompostieren von zerkleinerten biologischen Abfallstoffen**
Process and device for composting comminuted biological waste materials
Procédé et appareil pour le compostage des matières biologiques de déchet broyées

(30) Priorität: 09.10.1996 DE 19641496; 12.12.1996 DE 19651657
(43) Veröffentlichungstag der Anmeldung: 15.04.1998
(73) Patentinhaber: Mitteldeutsche Hartstein-Industrie AG, 63456 Hanau (DE)
(72) Erfinder: Barthel, Walter, 63505 Langenselbold (DE)
(74) Vertreter: Stoffregen, Hans-Herbert, Dr. Dipl.-Phys.

(56) Entgegenhaltungen:
- EP-A- 0 241 802
- EP-A- 0 444 392
- EP-A- 0 472 771
- FR-A- 2 150 245
- US-A- 2 038 471

## Beschreibung

Die Erfindung bezieht sich auf ein Verfahren zum Kompostieren von zerkleinerten biologischen Abfallstoffen durch Zugabe von pulvrigem Kompostierbeschleuniger gemäß den Merkmalen ds Oberbegriffes des Anspruchs 1. Ferner bezieht sich die Erfindung auf eine Vorrichtung zum Kompostieren von zerkleinerten biologischen Abfallstoffen gemäß den Merkmalen des Oberbegriffes des Anspruchs 4.

Unter Kompostierung versteht man die im wesentlichen aerobe Umsetzung und Verrottung von organischen Substanzen. An der Verrottung nehmen Mikroorganismen wie Bakterien, Schimmelpilze, Protozoen, Nematoden oder Actinomyceten teil. Da die Verrottung bei der Kompostierung nicht anaerob verlaufen sollte, ist für reichlichen Luftüberschuß zu sorgen. Die aerobe Verrottung geht bis zur Mineralisierung der organischen Stoffe, wobei Energie in Form von Wärme frei wird. Die Verrottung wird wesentlich von Sauerstoffgehalt, Wassergehalt, CN-Nährstoffgehalt, Temperatur und pH-Wert beeinflußt.

Es ist bekannt, in Mieten zu kompostieren. Hierbei wird das zu kompostierende Material durch Aussortieren nicht kompostierfähiger Teile, z. B. durch Siebung und gegebenenfalls Zerkleinerung vorbereitet. Vor Aufsetzen der Mieten wird eine Mischung der Stoffe vorgenommen. Befeuchtung schafft gute Voraussetzung für die Verrottung. Durch Temperaturkontrolle wird der aerobe Ablauf des Prozesses überwacht. Dabei kann durch häufiges Umsetzen der Mieten mit Hilfe z. B. eines Schaufelladers oder Greiferkrans die Luftzufuhr begünstigt und somit der Verrottungsprozeß beschleunigt werden. Auch ist es bekannt, das zur Kompostierung vorbereitete Material in geschlossene Gärzellen zu geben, wobei eine Verrottung unter optimalen Bedingungen kontrolliert und gesteuert abläuft.

Im Gartenbau ist es bekannt, dem zu verrottenden Gut Kalk, Asche oder andere Mineraldüngemittel oder Jauche, Gesteinsmehle, Pflanzenextrakte oder ähnliches zuzugeben. Dies erfolgt beim Schichten des zu kompostierenden Gutes oder beim Aufsetzen der Mieten. Nachteilig bei der Verwendung von pulvrigem Material ist es, dass eine hohe Staubbildung auftritt, die sowohl zur Gefährdung von Personen als auch zu einer explosiven Staub-Luft-Mischung führen kann, sofern in einem geschlossenen Raum kompostiert wird.

Beim Aufsetzen von Mieten tritt am Boden Staunässe auf, die als Sickerwasser aufgefangen wird. Diese Flüssigkeit ist übelriechend und muß nach Anfall entsorgt werden. Feuchtigkeit für das zu verrottende Material ist jedoch erforderlich, um den Rotteprozeß zu erhalten, so dass ein fortwährendes Abführen der Feuchtigkeit nicht möglich ist.

Aus der EP 0 305 520 A1 wird zu kompostierenden Abfallstoffen im Schwebezustand Gips zugegeben. Die Abfallstoffe selbst werden mittels eines Schrägzubringerförderers auf eine Mitnahmezinkentrommel und ein System von Beatern abgeworfen.

Nach der DE 37 36 889 A1 wird Kompostierbeschleuniger zum Beispiel in Form von Gesteinsmehl Abfallstoffen zugegeben, die in einem Sammelbehälter eingebracht sind.

Abfallstoffe und Kompostierbeschleuniger werden nach dem DE 90 12 454 U1 gemeinsam mittels eines Förderorgans transportiert, wobei jedoch zuvor Kompostiergut und Kompostierbeschleuniger einer Dosiereinrichtung zugeführt werden, von der die Mischung an das Förderorgan abgegeben wird.

In der FR-2 150 245 wird ein Verfahren zur Kompostierung von biologischen Abfallstoffen durch Aufgabe von zerkleinerten biologischen Abfallstoffen mit feuchter Konsistenz auf ein Förderorgan beschrieben. Auch erfolgt ein Verteilen von pulvrigem Kompostierbeschleunigern auf die Abfallstoffe und ein Abwerfen der bestäubten Abfallstoffe von dem Förderorgan zu einem Haufwerk. Verfahren und Vorrichtungen zur Verstärkung der Einwirkung des Kompostierbeschleunigers auf die Abfallstoffe sowie zum Schutz der Umwelt vor Staubbelastung sind der FR-2 150 245 A1 nicht zu entnehmen.

Aus EP 0 444 392 A2 ist ein Verfahren zur Herstellung von Düngemitteln oder Bodenhilfsstoffen aus mineralischen und organischen Komponenten durch Mischen von zumindest einer mineralischen Komponente mit zumindest einer organischen Komponente bekannt. Die Mischung wird pelletiert, wobei die mineralische Komponente vorzugsweise durch Vermahlen in einer tribiomechanischen Aktivierungsanlage auf eine Korngröße zwischen 0 und 1 mm, vorzugsweise zwischen 0 und 0,6 mm gebracht wird.

In EP 0 472 771 A1 wird ein Verfahren zur Herstellung von Humusdünge- und Bodenverbesserungsmitteln beschrieben, wobei verrottbare Materialien zunächst gehächselt und Mineralstoffe vermahlen werden, die sodann an eine gemeinsame Dosiereinrichtung gegeben und zur Bildung eines homogenisierten Mischgutes von dieser dosiert einem Mischer zugerührt werden, wobei das Mischgut an einem mit einem Absack- und Wiegeeinrichtung versehenen Sammelbehälter weitergeleitet wird. Die Anlage ist vollständig in einem Behälter angeordnet. Zur Abdeckung eines Förderbandes sind aus US 2,038,471 wannenförmige Segmente bekannt.

Der vorliegenden Erfindung liegt das Problem zu Grunde, ein Verfahren und eine Vorrichtung der eingangs genannten Art so weiterzubilden, dass bei Verminderung der Umweltbelastung die Einwirkung des Kompostierbeschleunigers auf die Abfallstoffe verbessert wird.

Erfindungsgemäß werden zur Lösung der Aufgabe die Verfahrensschritte des kennzeichnenden Teils des Anspruchs 1 vorgeschlagen.

Erfindungsgemäß wird der biologische Abfallstoff feuchter Konsistenz - vorzugsweise mit einem Feuchtegehalt von insbesondere zwischen 50 und 80 % - auf ein Förderorgan aufgegeben, wobei die Abfallstoffe mit dem pulvrigen Kompostierbeschleuniger feinverteilt H bestäubt werden und der bestäubte Abfallstoff nach einer weiteren Förderstrecke von dem Förderorgan zu einem Haufwerk abgeworfen wird, wobei als Kompostierbeschleuniger Natursteinmehl (Entstaubungsfüller) und/oder aufgemahlene Natursteinprodukte und/oder vulkanische Asche und/oder synthetisches Pulvermaterial und/oder Zwangsanfallstoffe und/oder aufbereitete Grundstoffe jeweils im wesentlichen mit einer Korngröße von in etwa < 0,09 mm verwendet werden.

Selbstverständlich kann der Feuchtegehalt auch unter 50 % liegen.

Dabei wird das Pulvermaterial dem feuchten biologischen Abfallstoff in einer Menge zugegeben, die einem Gewichtsanteil von etwa 0,05 bis 10 Gewichts%, insbesondere 1,0 bis 3,5 Gewichts% bezogen auf die Abfallstoffe entspricht. Insbesondere sollte als Pulvermaterial ein solches verwendet werden, dessen wirksame Oberfläche pro Kilogramm Material in etwa 7.000 m² beträgt.

Insbesondere wird als Pulvermaterial basisches Silikatgesteinsmehl, wie mikronisiertes Naturgestein Diabas verwendet.

Das Steinmehl wirkt dabei als verbesserndes und regenerierendes Additiv, insbesondere bei einem Rohkompost mit vielen Speiseresten und wenig Mineralstoffen.

Als Pulverstoffe kommen jedoch auch Materialien wie Kieselgur, Diatomeenerde, Feinsande, Verbrennungsstäube, Tierkörpermehle, Mühlennebenprodukte, Sekundärrohstoffe aus der großtechnischen Lebensmittel- und Getränkeindustrie, Meeresalgen, Holzasche, Hornmehle in Frage.

Als synthetisches Pulvermaterial ist Kieselsäure oder Microsilica zu nennen.

Durch die erfindungsgemäß verwendeten Additive, insbesondere basische Gesteinsmehle, erfolgt eine Beschleunigung der Bioabfallkompostierung bei gleichzeitiger Reduzierung der Geruchsemmission. Die Mineralisation der organischen Stoffe durch Mikroorganismen erfährt eine Unterstüzung in der Form, dass die hohe Oberfläche des Gesteinsmehles die Ansiedlung bzw. den Kontakt mit Mikroorganismen beschleunigt. Insbesondere bei der Verwendung von aus dem Naturgestein Diabas hergestelltem Steinmehl erfolgt eine Optimierung der Lebensverhältnisse für Mikroorganismen, so dass die Rottedauer der Kompostmassen verkürzt wird. In dem Endprodukt Kompost erfolgt durch die Steinmehlzugabe eine Anreicherung des Mineralstoffanteils und der Spurenelemente. Bei der Ausbringung des Kompostes wird folglich die Effektivität der Pflanzenemährung gesteigert.

Neben der Beschleunigung des Verrottens erfolgt eine spürbare Geruchsreduzierung sowie eine bodenverbessernde Wirkung des Endproduktes.

Neben diesen Vorteilen ist jedoch auf einen weiteren besonders zu verweisen. Normalerweise läßt feuchte Biomasse am Boden von Mieten Staunässe auftreten, die als Sickerwasser aufgefangen wird. Diese übelriechende Flüssigkeit muß je nach Anfall entsorgt werden. Bei der Verwendung von insbesondere Gesteinsmehl wie aufgemahlenem Naturgestein Diabas in homogener Verteilung in dem Rohkompost erfolgt eine Adsorption von Feuchtigkeit, so dass der Anfall von Sickerwasser erheblich reduziert wird. Durch die Adsorption der Feuchtigkeit macht der Rohkompost einen trocknen Eindruck, gleichwenn das gebundene Wasser dem Rotteprozeß erhalten bleibt. Durch die Speicherung der Feuchtigkeit ist die zum Verrotten erforderliche Reaktionsfeuchte sichergestellt, ohne dass ein nachträgliches Berieseln von Kompostmieten erforderlich sein muß. Das saugfähige Natursteinmehl bindet Wasser und hält es in der vorausgegangenen homogenen Verteilung in der Biomasse vor.

Den die Umsetzung vornehmenden Bakterien bietet das erfindungsgemäße verwendete Steinmehl die notwendige Feuchtigkeit. Gleichzeitig wird der erforderliche Lebensraum aufgrund der großen Oberfläche und zusätzlich Nahrung zur Verfügung gestellt. Der gesamte Reifeprozeß erfährt eine Regulierung, die mit einer zu einer Zeitraffung führenden Beschleunigung einhergeht. Folglich werden Kompostieranlagen, die nach dem erfindungsgemäßen Verfahren betrieben werden, leistungsfähiger, da ein schnellerer Durchlauf ermöglicht wird.

Zusammenfassend lassen sich nachstehende Vorteile aufführen, die mit dem erfindungsgemäßen Verfahren erzielbar sind:
- homogene Verteilung von gebundener adsorbierter Feuchte, die dem Rotteprozeß verfügbar bleibt,
- keine Staunässe am Mietenboden, wodurch sich die Entsorgung von Sickerwasser reduziert,
- keine oder nur geringe Berieselung der Mieten mit Frischwasser,
- Geruchsreduzierung,
- Verbesserung des Nährbodens für die reaktiven Bakterien,
- kürzere Reifezeit des Kompostes und der damit verbundene höhere Durchsatz,
- Mineralstoffanreichung des Endproduktes.

Mit anderen Worten zielt die Erfindung auf eine Beschleunigung der Bioabfallkompostierung bei gleichzeitiger Reduzierung der Emission durch Zugabe von natürlichem Steinmehl ab. Hierbei erfolgt eine Anreicherung des Mineralstoffanteils in dem Endprodukt Kompost.

Eine Vorrichtung zum Kompostieren von zerkleinerten biologischen Abfallstoffen umfassend ein die Abfallstoffe förderndes und sodann zur Bildung von Haufwerk abwerfendes Förderorgan wie Förderband mit einem oberhalb des Förderbandes angeordneter Dosiereinrichtung zur Aufgabe von Pulvermaterial zeichnet sich durch die Merkmale des Anspruchs 4 aus.

Die Dosiereinrichtung ist im Abstand zum Abwurfende des Förderorgans angeordnet, so dass während des Förderns des bereits mit Pulvermaterial bestäubten biologischen Abfallstoffs eine Adsorption an der Oberfläche erfolgt. Aufgewirbelter bzw. frei werdender Staub des Pulvermaterials gelangt zurück zu dem Abfatlstoff, da dieser umfangsseitig vollständig gegenüber der Umgebung abgedeckt ist, und zwar zum einen durch das Förderorgan und zum ändern durch den Staubschutz.

Dabei können der erste und zweite Staubschutz als Einheit ausgebildet sein. Selbstverständlich besteht auch die Möglichkeit, dass die Dosiereinrichtung eine Aussparung der ersten Abdeckung durchsetzt.

Unabhängig von der Staubabschirmung gegenüber der Umgebung ist die Dosiereinrichtung derart ausgebildet, dass das Pulvermaterial feinverteilt abgegeben wird. Hierzu weist die Dosiereinrichtung vorzugsweise eine schlitzförmige Austrittsöffnung wie teilkreisförmige Austrittsöffnung eines Verteilerkonus auf.

In Weiterbildung der Erfindung ist vorgesehen, dass zwischen einem Pulvermaterial enthaltenden Silo und der Dosiereinrichtung eine Förderschnecke verläuft, wobei es sich vorzugsweise um eine flexible Förderschnecke handelt, die innerhalb eines Rohres oder eines Schlauches verläuft. Durch die Art des Förderorgans ist sichergestellt, dass das zur Brückenbildung neigende Pulvermaterial insbesondere in Form von Natursteinmehl problemlos aufgegeben und feinverstäubt auf das zu verrottende Material verteilt werden kann.

Um sicherzustellen, dass über die Dosiereinrichtung nur dann Pulvermaterial abgegeben wird, wenn sich auf dem Förderorgan wie Förderband Biomasse befindet, sieht eine Weiterbildung der Erfindung vor, dass das Förderorgan an seinem auftragsseitigen Ende einen Sensor aufweist, über den in Abhängigkeit von von dem Förderorgan gefördertem Abfallstoff die Dosiereinrichtung steuer- bzw. regelbar ist. Dabei kann der Sensor einen oberhalb des Förderorgans in Förderrichtung schwenkbar angeordneten Fühler aufweisen.

Erfindungsgemäß wird ein durch Steuerungssysteme vorzugebender Mengenstrom feinkörniges Pulverprodukt mit einer flexiblen Förderschnecke zu einem Förderband transportiert. Dieses Förderband selbst dient dem Auftrag von Frischkompost aus z. B. einer Rottetrommel zu dessen Weiterbehandlung.

Die Steuerung ist elektronisch ausgelöst und wird in Abhängigkeit von der Leistung des Antriebsmotors variiert. Nach vorgegebener Einstellung wird der Mengenstrom am Fördergut bestimmt, so dass eine exakte Dosierung möglich ist.

Die Dosiereinrichtung in Form eines Auslaufadapters im Endbereich der Förderschnecke ist dabei so ausgelegt, dass das pulvrige Material über einen Konus, verteilt über die Breite des Förderbandes fächerförmig abgegeben wird. Der kontinuierlich geförderte Bioabfall erfährt eine Bestäubung mit dem feinteiligen Pulver, das als Additiv zu bezeichnen ist. Eine vor und nach der Dosiereinrichtung vorhandene Abdeckung vorzugsweise aus Blech gewährleistet den erforderlichen Staubschutz. Aufsteigender Staub wird durch die Abdeckung zurückgehalten und fällt auf das zu verrottende Gut zurück, das durch seine vorgegebene Feuchte den mineralischen Zuschlag bindet.

Erfindungsgemäß wird ein Aggregat zum Fördern, Dosieren und Ausbreiten von feinteiligen Produkten in Kompostanlagen vorgeschlagen, um die gewünschte Beschleunigung der Bioabfallkompostierung bei gleichzeitiger Reduzierung der Emission zu erreichen, insbesondere bei einem Rohkompost mit hohem Speiseresteanteil und wenigen Mineralstoffen.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung eines der Zeichnung zu entnehmenden bevorzugten Ausführungsbeispiels.

Es zeigen:
- Fig. 1: eine Prinzipdarstellung einer Vorrichtung zum Fördern, Dosieren und Ausbringen von pulvrigem Kompostierbeschleuniger auf Rohkompost,
- Fig. 2: eine Detaildarstellung der Anordnung im Bereich der Aufgabe des Rohkompostes und
- Fig. 3: eine Detaildarstellung einer den pulvrigen Kompostierbeschleuniger ausbringenden Dosiereinrichtung.

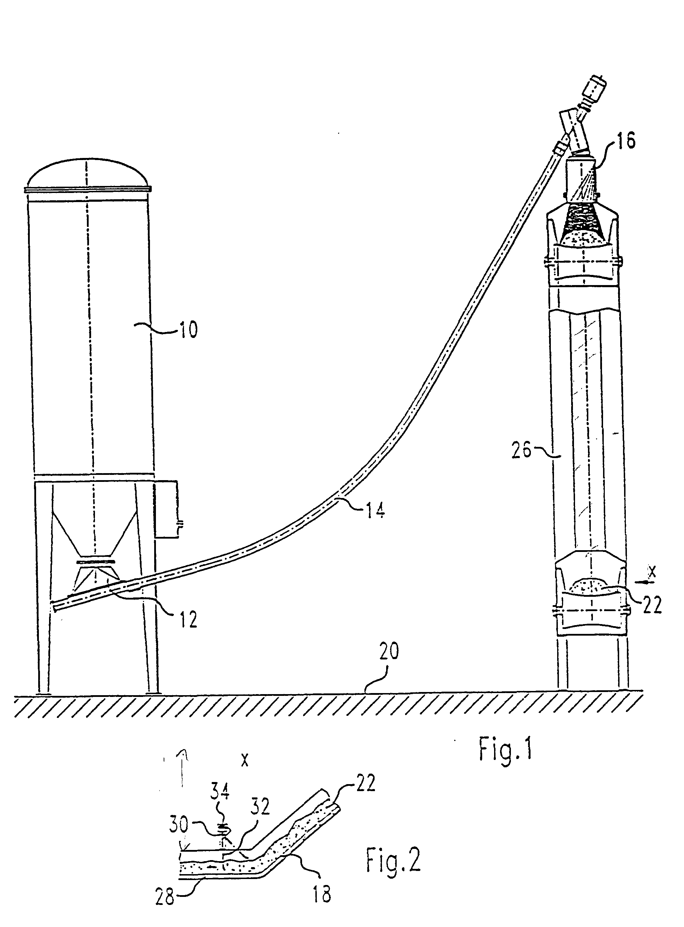

In Fig. 1 is eine Prinzipdarstellung einer Anordnung zum Fördern, Dosieren und Ausbringen von einem pulvrigem Kompostierbeschleuniger wie insbesondere gemahlenem Natursteinprodukt wie Diabas einer Körnung vorzugsweise < 0,09 mm dargestellt. Das pulvrige Material ist in einem Silo 10 bevorratet, von dem es über einen Austrag 12 einer flexiblen Förderschnecke 14 zugeführt wird, um zu einer Dosiereinrichtung 16 zu gelangen, die oberhalb eines Förderbandes 18 angeordnet ist, und zwar in einem Abstand X (mit 1 ≤ X ≤ 5 m) zum Abwurfende.

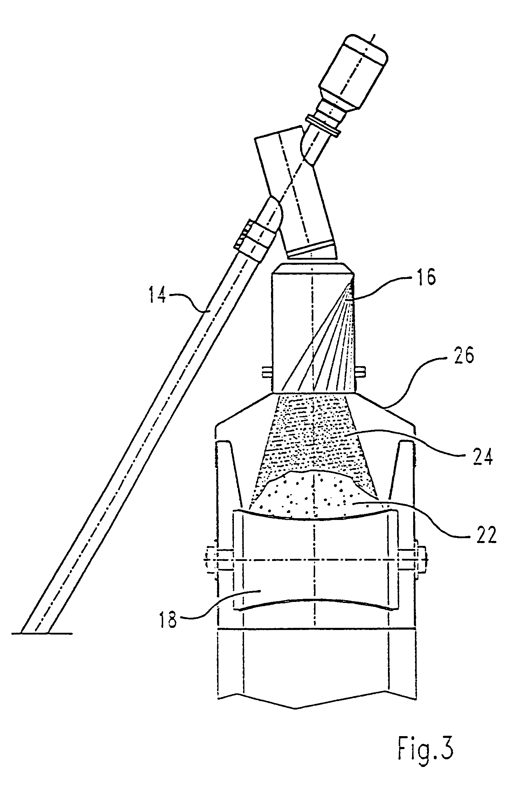

Das Förderband geht von einem Boden 20 aus, von dem Rohkompost 22 auf das Förderband aufgetragen wird, welches sodann im höhergelegenen Abwurfende zu Mieten aufgebracht wird. Im Abstand von z. B. 1 Meter bis 1,50 Meter wird auf den Rohkompost über die Dosiereinrichtung 16 feinverteilt das pulvrige Material aufgebracht, so dass der Rohkompost oberflächig vollständig mit dem Material bepudert ist. Hierzu weist die Dosiereinrichtung 16 einen Auftragskonos auf, der einen halbkreisförmigen Austrittsschlitz aufweist, um fächerhaft verteilt das Pulver aufzutragen. Dieser flächige Vorhang von pulvrigem Material, das auf den Rohkompost 22 feinverteilt wird, ist in Fig. 3 durch den schraffierten Bereich 24 angedeutet.

Dadurch, dass das pulvrige Material auf den Rohkompost im Abstand zum Abwurfpunkt vom Transportband gegeben wird, erfolgt bis zum Ende des Förderweges in einem gewissen Umfang eine Homogenisierung, d.h. Vermischen zwischen dem Kompost und dem pulvrigen Material. Der Ort, an dem der Kompost mit dem Material bestreut, bepudert wird, kann von einigen bis zig Metern zum Abwurfpunkt, also dem Ende des Förderbandes liegen, und zwar in Abhängigkeit von den Anlagebedingungen und/oder der Kompostmasse und deren Konsistenz und Trockengehalts.

Über die Förderstrecke des Förderbandes 18 bis hin zu der Dosiereinrichtung 16 ist das Förderband von einer Abdeckung 26 abgeschirmt, die einen Staubschutz bildet. Somit ist sichergestellt, dass das über die Dosiereinrichtung 16 auf den Rohkompost 22 abgegebene pulvrige Material nicht nach außen dringen kann, sondern stets auf den Rohkompost 22 zurückfällt und dort von der Feuchtigkeit adsorbiert wird.

Um sicherzustellen, dass nur dann pulvriges Material über die Dosiereinrichtung 16 abgegeben wird, wenn sich auf dem Förderband 18 Biomasse befindet, ist im Auftragsbereich 28 des Förderbandes 18 ein Sensor 30 vorgesehen, der einen in Förderrichtung verschwenkbaren Hebel 32 umfaßt, über den ein Schaltelement wie Näherungsschalter 34 betätigbar ist. Mittels des Hebelelementes 32 wird delektiert, ob auf dem Förderband 18 feuchter Rohkompost 22 aufgetragen und gefördert wird oder nicht. Mittels des Hebelelementes 32 und des vorzugsweise induktiven Näherungsschalters 34 kann des Weiteren die Menge des transportierten Rohkomposts aufgrund der Höhe der aufgetragenen Schicht bestimmt werden, um wiederum die Menge des abzugebenden pulvrigen Materials steuern bzw. regeln zu können. Dabei sollte das pulvrige Material in einer Menge auf den Rohkompost 22 feinverteilt abgegeben werden, die in etwa 1 bis 3,5 Gewichts% bezogen auf die Rohkompostmenge beträgt.

Die das pulvrige Material aus dem Silo 10 zu der Dosiereinrichtung 16 fördernde Schnecke 14 ist flexibel, wodurch sichergestellt wird, dass eine Brückenbildung von pulvrigem Material nicht auftreten kann. Der Staubschutz oder die Abdeckung 26 stellt sicher, dass das überaus feine Pulver nicht in die Umgebung gelangen kann, wodurch andernfalls eine Gefährdung von Personen erfolgen könnte.

Das dem Förderband 18 zugeführte Rohkompostmaterial kann Frischkompost sein, welches einer Rottetrommel entnommen ist. Dies ist jedoch nicht zwingend. Wesentlich ist jedoch, dass es sich bei der zugeführten Biomasse um zerkleinerte, vorsortierte Abfallstoffe biologischer Art mit einem Feuchtigkeitsgehalt vorzugsweise im Bereich zwischen 50 und 80 % handelt.

Der Austrag des pulvrigen Materials wie Steinmehl aus dem Silo 10 wird durch die Austragseinrichtung 12 am Ausgang des Silos 10 und durch die flexible Förderschnecke 14 ohne Brückenbildung gewährleistet.

Ferner ist zu erwähnen, dass es sich bei dem pulvrigen Material nicht nur um mikronisiertes Naturgestein Diabas handeln kann, sondern auch um Kieselgur, Diatomeenerde, Feinsande, Verbrennungsstäube, Tierkörpermehle, Mühlennebenprodukte, Sekundärrohstoffe aus der großtechnischen Lebensmittel- und Getränkeproduktion, synthetische Kieselsäure, Microsilica, Meeresalgen, Holzasche, Hornmehle, Tierkörpermehle, vulkanische Asche oder sonstige geeignete Materialien.

## Patentansprüche

1. Verfahren zum Kompostieren von zerkleinerten biologischen Abfallstoffen durch Zugabe von pulvrigem Kompostierbeschleuniger, umfassend die Verfahrensschrittte:
- Aufgabe zerkleinerter biologischer Abfallstoffe feuchter Konsistenz auf ein Förderorgan,
- feinverteiltes Verstäuben pulvrigen Kompostierbeschleunigers auf die Abfallstoffe während deren Transport auf dem Förderorgan und
- Abwerfen der bestäubten Abfallstoffe nach einer weiteren Förderstrecke von dem Förderorgan zu einem Haufwerk,
**dadurch gekennzeichnet,**
- **dass** das feinverteilte Verstäuben des pulvrigen Kompostierbeschleunigers gegenüber der Umwelt abgeschirmt erfolgt,
- **dass** der pulvrige Kompostierbeschleuniger in einem Abstand x mit x im Bereich von 1 ≤ x ≤ 5 m vor einem Abwurfende ausgebracht wird
- und **dass** die bestäubten Abfallstoffe bis zum Abwerfen in einer abgeschirmten weiteren Förderstrecke weitertransportiert werden, wobei eine Homogenisierung und Vermischung des Kompostierbeschleunigers und der Abfallstoffe erfolgt.

2. Verfahren nach Anspruch 1,
**dadurch gekennzeichnet,**
**dass** als Kompostierbeschleuniger ein Pulvermaterial einer Körnung von in etwa < 0,09 mm verwendet wird und dass insbesondere als Kompostierbeschleuniger Natursteinmehl (Entstaubungsfüller und/oder aufgemahlene Natursteinprodukte) und/oder vulkanische Asche und/oder Meeresalgen und/oder Holzasche und/oder Hornmehle und/oder Tierkörpermehle und/oder Kieselgur und/oder Diatomeenerde und/oder Feinsande und/oder Verbrennungsstäube und/oder Mühlennebenprodukte oder als synthetisches Pulvermaterial synthetische Kieselsäure und Microsilica verwendet werden.

3. Verfahren nach Anspruch 1 oder 2,
**dadurch gekennzeichnet,**
**dass** als Abfallstoff feuchte Biomasse mit einem Feuchtegehalt zwischen 50 und 85 oder unter 50 % verwendet wird.

4. Vorrichtung zum Kompostieren von zerkleinerten biologischen Abfallstoffen umfassend ein die Abfallstoffe förderndes und sodann zur Bildung von Haufwerk abwerfendes Förderorgan (18) wie Förderband mit einer oberhalb des Förderbandes angeordneten Dosiereinrichtung (16) zur Abgabe von Pulvermaterial,
**dadurch gekennzeichnet,**
- **dass** das Förderorgan von einem ersten Staubschutz abgedeckt ist,
- **dass** die oberhalb des Förderorgans angeordnete Dosiereinrichtung Pulvermaterial feinverteilt auf die Abfallstoffe während des Förderns durch das Förderorgan aufgibt, dass die Dosiereinrichtung in Bezug auf ihre Öffaung von demselben oder einem zweiten Staubschutz umgeben ist und
- **dass** die Dosiereinrichtung derart mit Abstand x, mit x im Bereich 1 ≤ x < 5 m von einem Abwurfende des abgeschirmten Förderorgans angeordnet ist, dass während des Förderns der bereits mit Pulvermaterial bestäubten Abfallstoffe eine Homogenisierung und Vermischung von Pulvermaterial und Abfallstoffen bis zum Abwurfende erfolgt.

5. Vorrichtung nach Anspruch 4,
**dadurch gekennzeichnet,**
**dass** der erste und der zweite Staubschutz (26) miteinander verbunden sind und vorzugsweise eine Einheit bilden.

## Claims

1. A method for composting crushed biological waste substances by adding powdery composting accelerator, comprising the method steps:
- feeding of crushed biological waste substances of a moist consistency onto a conveying element,
- finely spread dusting of powdery composting accelerator onto the waste substances while they are being conveyed on the conveying element, and
- tipping of the dusted waste substances from the conveying element to a pile following a further conveying section,
wherein
- the finely spread dusting of the powdery composting accelerator is performed screened off from the environment,
- the powdery composting accelerator is applied at a distance x before a tipping end, with x being in the range from 1 ≤ x ≤ 5 m,
- and the dusted waste substances are conveyed further in a screened further conveying section before they are tipped, where homogenization and mixing of the composting accelerator and the waste substances take place.

2. Method according to Claim 1,
wherein
a powder material with a grain size of approximately < 0.09 mm is used as the composting accelerator, in particular natural stone dust (dust removal fillers and/or pulverized natural stone products) and/or volcanic ashes and/or marine algae and/or wood ashes and/or horn meals and/or animal meals and/or kieselgur and/or diatomaceous earth and/or fine sands and/or combustion dusts and/or milling byproducts are used as the composting accelerator, or synthetic silicic acid and microsilica are used as the synthetic powder material.

3. Method according to Claim 1 or 2,
wherein
moist biomass with a moisture content of between 50 and 85 or below 50% is used as the waste substance.

4. A device for composting crushed biological waste substances comprising a conveying element (18) conveying the waste substances and then tipping them to form a pile, such as a conveyor belt with a metering device (16) arranged above the conveyor belt to dispense powder material,
wherein
- the conveying element is covered by a first dust guard,
- the metering device arranged above the conveying element applies powder material in finely spread form onto the waste substances while they are being conveyed by the conveying element,
- the metering device is surrounded by the same or by a second dust guard relative to its opening, and,
- the metering device is arranged with a distance x, with x being in the range from 1 ≤ x ≤ 5 m, before a tipping end of the screened conveying element such that during conveying of the waste substances already dusted with powder material homogenization and mixing of powder material and waste substances take place.

5. Device according to Claim 4,
wherein
the first and the second dust guard (26) are connected to one another and preferably form a single unit.

## Revendications

1. Procédé pour composter des déchets biologiques broyés par addition d'un accélérateur de compostage poudreux, comportant les étapes suivantes :
- chargement de déchets biologiques broyés à consistance humide sur un dispositif de convoyage,
- pulvérisation finement répartie de l'accélérateur de compostage poudreux sur les déchets pendant le transport sur le dispositif de convoyage et
- déversement des déchets saupoudrés après une section de transport supplémentaire du dispositif de convoyage sur un amoncellement,
**caractérisé en ce**
- **que** le saupoudrage finement réparti de l'accélérateur de compostage poudreux est effectué de manière confinée par rapport à l'environnement,
- **que** l'accélérateur de compostage poudreux est appliqué à une distance x de l'extrémité du dispositif de déversement sachant que x se situe dans la plage 1 ≤ x ≤ 5 m,
- et **qu'**avant d'être déversés, les déchets saupoudrés sont acheminés dans un autre dispositif de convoyage confiné où a lieu une homogénéisation et un mélange de l'accélérateur de compostage et des déchets.

2. Procédé selon la revendication 1,
**caractérisé en ce**
**qu'**en tant qu'accélérateur de compostage est utilisée une matière poudreuse d'une granulation d'environ < 0,09 mm et qu'en particulier sont utilisées comme accélérateur de compostage de la poudre de pierre naturelle (remplissages de dépoussiéreurs et/ou des produits à base de pierre naturelle) et/ou des cendres volcaniques et/ou des algues marines et/ou de la cendre de bois et/ou des poudres de corne et/ou des farines animales et/ou de la terre d'infusoires et/ou de la terre à diatomées et/ou des sables fins et/ou des poussières de combustion et/ou des sous-produits de minoterie ou, en tant que matières poudreuses synthétiques, de l'acide silice et du microsilice synthétiques.

3. Procédé selon la revendication 1 ou 2,
**caractérisé en ce**
**que** de la biomasse humide avec une teneur en humidité entre 50 et 85 ou inférieure à 50 % est utilisée comme déchets.

4. Dispositif pour composter des déchets biologiques broyés comprenant un dispositif de convoyage (18) verseur transportant les déchets et contribuant à former un amoncellement, réalisé sous forme de bande transporteuse, avec un doseur (16) placé au-dessus de la bande transporteuse et destiné à distribuer des matières poudreuses,
**caractérisé en ce**
- **que** le dispositif de convoyage est recouvert d'une première protection antipoussière,
- **que** le doseur placé au-dessus du dispositif de convoyage répartit finement des matières poudreuses sur les déchets pendant qu'ils sont transportés par le dispositif de convoyage, qu'en ce qui concerne son ouverture, le doseur est entouré de la même ou d'une deuxième protection antipoussière et
- **que** le doseur est placé à une distance x d'une extrémité du dispositif de déversement du dispositif de convoyage confiné, sachant que x se situe dans la plage 1 ≤ x ≤ 5 m, de sorte que pendant le transport des déchets déjà saupoudrés de matières poudreuses, une homogénéisation et un mélange des matières poudreuses et des déchets ont lieu jusqu'à l'extrémité du dispositif de déversement.

5. Dispositif selon la revendication 4,
**caractérisé en ce**
**que** la première et la deuxième protections antipoussière (26) sont reliées entre elles et forment de préférence une unité.
